Europäisches Patentamt

European Patent Office

Office européen des brevets

(19)

(11) Numéro de publication : **0 032 853
B1**

(12) **FASCICULE DE BREVET EUROPÉEN**

(45) Date de publication du fascicule du brevet :
24.08.83

(51) Int. Cl.³ : **B 64 C 25/46, B 60 T 8/00**

(21) Numéro de dépôt : 81400013.9

(22) Date de dépôt : 07.01.81

(54) Procédé et dispositif pour le freinage d'un aéronef par recherche d'un glissement optimal des roues freinées.

(30) Priorité : 11.01.80 FR 8000558

(43) Date de publication de la demande :
29.07.81 Bulletin 81/30

(45) Mention de la délivrance du brevet :
24.08.83 Bulletin 83/34

(84) Etats contractants désignés :
DE GB IT

(56) Documents cités :
DE A 2 204 092
FR A 1 453 883
FR A 1 455 883
US A 3 508 795
US A 3 920 282

(73) Titulaire : **SOCIETE NATIONALE INDUSTRIELLE
AEROSPATIALE
37 boulevard de Montmorency
F-75016 Paris Cedex 16 (FR)**

(72) Inventeur : **Goicoechea, José Raymond
30 rue Toulouse Lautrec .
F-31700 Blagnac (FR)**

(74) Mandataire : **Bonnetat, Christian
Cabinet PROPI Conseils 23 rue de Léningrad
F-75008 Paris (FR)**

Procédé et dispositif pour le freinage d'un aéronef par recherche d'un glissement optimal des roues freinées

La présente invention concerne un procédé de régulation de freinage d'un aéronef roulant sur le sol, pendant sa phase de freinage après atterrissage.

Elle concerne plus précisément une régulation de freinage par recherche d'un glissement optimal entre les roues freinées et le sol, procurant un coefficient d'adhérence maximal en fonction des conditions dudit freinage : état de la piste, charge, vitesse, température et pression des pneumatiques, etc...

Pour une bonne compréhension de l'invention, il y a lieu de rappeler les différents paramètres intervenant au cours du freinage d'un aéronef roulant sur le sol, au moyen du freinage des roues de son train d'atterrissage.

Lorsqu'un aéronef utilise pour voler la récupération de poussée, il ne peut, après un vol, reprendre contact avec le sol que tangentiellement, de façon à conserver une vitesse horizontale suffisante pour assurer une portance minimale de sa voiture. La prise de contact avec le sol a donc lieu à une vitesse relativement élevée, et à ce moment, les roues des trains d'atterrissage sont brutalement entraînées en rotation. Les roues du train d'atterrissage principal, placées sous la voiture, prennent d'abord contact avec le sol et c'est ensuite le tour des roues du train avant.

Le freinage peut alors commencer, sur les roues dudit train principal, les roues du train avant n'étant jamais freinées. Pendant la période initiale de ce freinage, l'aéronef est à la fois porté par ses roues et par sa voiture, car alors sa portance n'est pas annulée. Cependant, la vitesse de l'aéronef décroissant, la portance résiduelle décroît et par suite la charge sur le train principal augmente.

L'adhérence des roues du train d'atterrissage principal augmente donc du fait de cette augmentation de charge et du fait de la décroissance de la vitesse. En effet, les pneumatiques équipant ces roues ont une adhérence qui est une fonction inverse de la vitesse de roulage.

Pour obtenir l'arrêt de l'aéronef après une distance de freinage aussi courte que possible, il est donc indispensable d'adapter le couple de freinage à l'adhérence des roues freinées, au cours du déroulement temporel dudit freinage.

Si un couple de freinage est appliqué à une roue supportant une charge P, il est équilibré par la force d'inertie de la masse correspondant à la charge P, masse dotée d'une certaine vitesse, le point d'appui étant le sol, et plus précisément la réaction longitudinale du sol sur le pneumatique, grâce à l'adhérence de celui-ci sur le sol.

Au début du freinage, l'aéronef possède une énergie cinétique E, et pendant le freinage, cette énergie doit être absorbée par les freins des roues, qui créent une force résistante F pendant le parcours de la distance d'arrêt L. Le travail de la force résistante F sur le trajet L est donc égal à l'énergie cinétique, de sorte que l'on peut écrire :

$$E = FL \qquad (1)$$

Cette énergie est transformée en chaleur dans les freins. L'énergie E étant déterminée par la vitesse d'atterrissage et la masse de l'aéronef, il faut que la force résistante F prenne une valeur maximale $F_m$ pour que la distance d'arrêt L soit minimale.

Cependant, la force résistante F est déterminée par l'adhérence des pneumatiques sur le sol, et pour un sol déterminé, un pneumatique déterminé et une vitesse déterminée, F a une valeur maximale qu'il n'est pas possible de dépasser sous peine de bloquer la roue freinée. Le coefficient d'adhérence de la roue dans ces conditions se définit par la relation :

$$\mu = F_m/P \qquad (2)$$

$F_m$ étant la valeur maximale de F et P la charge sur la roue, mentionnée ci-dessus.

Si le couple de freinage est suffisamment élevé pour permettre d'obtenir $F_m$, la valeur minimale de L est déterminée par l'adhérence pneumatique-sol, puisque des relations (1) et (2), on déduit la relation :

$$L = E/P\mu \qquad (3)$$

Si F prend une valeur légèrement supérieure à $F_m$, la roue freinée se bloque et $\mu$ prend alors, pour une vitesse faible, la valeur du coefficient de frottement entre le pneumatique et le sol.

On voit de plus que, lorsque la charge verticale augmente sur la roue, il est possible d'augmenter $F_m$ pour un $\mu$ constant. C'est le cas au cours du ralentissement d'un aéronef, puisque la portance de sa voiture se détruit progressivement.

Par ailleurs, il est important de remarquer que le coefficient d'adhérence $\mu$ d'une roue freinée est une fonction du glissement entre cette roue et le sol sur lequel elle roule. Par glissement, on entend la grandeur g définie par

$$g = w - w'/w \qquad (4)$$

expression dans laquelle w' représente la vitesse angulaire de la roue freinée, et w la vitesse angulaire d'une roue non freinée de l'aéronef (par exemple une roue du train avant) et présentant le même diamètre que ladite roue freinée.

Cette définition est équivalente à

$$g = V_a - V_f/V_a \qquad (5)$$

dans laquelle $V_a$ est la vitesse longitudinale horizontale de l'aéronef et $V_f$ la vitesse tangentielle de la roue freinée.

Du fait, entre autres, de l'élasticité du pneumatique, le coefficient d'adhérence $\mu$ prend une valeur maximale pour un glissement déterminé, dit optimal, supérieur à zéro, la courbe représentant la variation de $\mu$ en fonction de g comportant une branche à forte pente pour des valeurs de g inférieures à ladite valeur optimale et une branche décroissant relativement doucement pour des valeurs de g supérieures à ladite valeur optimale. Généralement, la valeur optimale de g est voisine de 0,15.

Il est donc intéressant de réguler le freinage d'un aéronef en fonction du glissement des roues.

On connaît déjà, notamment les brevets français FR-A-1 453 883 et FR-A-1 455 883, des procédés de freinage de ce type. Ces procédés concernent un processus de recherche continue d'un maximum d'adhérence au cours d'une phase de freinage, et les dispositifs qui les mettent en application nécessitent des éléments spécifiques tels que des servovalves spéciales dont le montage doit être de préférence prévu lors de l'étude d'un aéronef. Ces dispositifs s'adaptent donc difficilement sur des aéronefs non prévus pour les recevoir.

Le procédé selon l'invention remédie à ces inconvénients et propose un processus de mesure séquentiel du coefficient d'adhérence pneumatique-piste et d'application séquentielle également d'un couple de freinage conduisant au glissement sensiblement optimal pour la séquence considérée.

A cette fin, selon l'invention, le procédé de freinage d'un aéronef roulant sur le sol après un atterrissage et comportant une pluralité de roues freinées, par recherche d'un coefficient d'adhérence maximal entre lesdites roues freinées et le sol sur lequel elles roulent, est remarquable en ce que l'on subdivise ledit freinage en une pluralité de périodes de freinage successives et en ce que chacune desdites périodes de freinage est elle-même partagée en une première phase pendant laquelle d'une part, on impose à chaque roue freinée une valeur de glissement de consigne qui lui est propre et qui est différente des valeurs de glissement de consigne imposées aux autres roues freinées, et d'autre part, on détermine la valeur optimale de glissement de la période à partir du calcul de grandeurs représentatives des coefficients d'adhérence correspondant auxdites différentes valeurs de glissement de consigne, et en une seconde phase pendant laquelle on impose ladite valeur optimale de glissement à la totalité desdites roues freinées.

Ainsi, cette valeur optimale de glissement est calculée à partir de mesures obtenues par diversification de glissements de consigne d'une pluralité de roues, appartenant par exemple au même train d'atterrissage, cette diversification étant effectuée pendant une durée très faible par rapport à la période de freinage du fait que la première phase d'une période de freinage est de très courte durée par rapport à la seconde phase de la même période de freinage. Par exemple, la durée de la première phase d'une période de freinage peut être choisie égale à 0,5 s, alors que ladite seconde phase de ladite période est de quelques dizaines de secondes. Pendant la première phase d'une période de freinage, on obtient autant de couples de valeurs pour μ et g, qu'il y a de roues freinées, de sorte qu'à partir de cette pluralité de couples de valeurs, il est possible, par exemple au moyen d'une calculatrice électronique, de reconstituer la courbe μ = f(g) de la période et donc de déterminer la valeur maximale de μ et la valeur optimale correspondante de g.

Dans chacun desdits couples de valeurs (μ, g), g est connu puisqu'imposé aux roues freinées. Il est donc nécessaire d'appréhender les valeurs de μ correspondant à chaque valeur de g.

On a vu ci-dessus que μ est sensiblement proportionnel à la force résistante F, ou force de traînée. Le freinage s'effectuant sur un élément circulaire et rotatif, il est plus pratique de considérer le couple de traînée (ou couple résistant) sur une roue, résultant d'un couple de freinage appliqué sur ladite roue.

Pour obtenir la valeur maximale de μ, il y a donc lieu de chercher la valeur maximale du couple de traînée C. Celui-ci est donné par la relation :

$$C = C_F + I \, dwf/dt \qquad (6)$$

où $C_F$ est le couple de freinage appliqué sur une roue, I le moment d'inertie de cette roue et $dwf/dt$ la décélération angulaire due au freinage.

En effet, au moment où le train d'atterrissage touche le sol, les roues sont lancées en rotation, et leur masse étant importante, il y a lieu d'en tenir compte et de retrancher du couple de freinage le couple d'inertie des roues freinées pour obtenir le couple de traînée. Ceci est réalisé du fait que $dwf/dt$ a une valeur négative.

Dans la relation (6) :

— le moment d'inertie I d'une roue ne dépend que de celle-ci et est donc connu,

— $dwf/dt$ peut être obtenu par dérivation de la vitesse angulaire wf dont l'image peut être un courant électrique fourni par une génératrice tachymétrique entraînée par chaque roue,

— le couple de freinage $C_F$ doit être mesuré.

Sur un train d'atterrissage où chaque frein a sa propre barre de réaction, on peut mesurer le couple de freinage $C_F$ à l'aide de jauges de contrainte placées sur chaque barre. Lorsqu'une seule barre de réaction est utilisée pour les deux freins d'une paire de roues, cela n'est plus possible.

Dans ce dernier cas, si l'équipement de freinage comprend une bâche hydraulique, une servovalve électrohydraulique et des freins à récepteurs hydrauliques, il est possible de déterminer le couple de freinage $C_F$ à partir du courant électrique de servovalve. Celui-ci est alors corrigé en fonction du gain de servovalve (en bars par milliampère) et du gain de frein (en mdaN par bar).

On obtient alors un courant image du couple de freinage $C_F$ en adoptant des valeurs respectives forfaitaires pour lesdits gains de servovalve et de frein.

Les différentes valeurs de couple de traînée C en fonction des différents glissements étant calculées, il ne reste plus qu'à déterminer la valeur optimale du glissement. Ceci peut être fait par reconstitution de la courbe μ = f(g).

Ces différentes valeurs de C étant successivement calculées pour différentes vitesses, il en résulte que la charge de chaque roue (qui varie avec la vitesse comme mentionné ci-dessus), est sensiblement prise en compte, de sorte que les valeurs du couple de traînée ainsi calculées sont sensiblement proportionnelles au coefficient d'adhérence μ.

On pourrait également obtenir une image de μ en mesurant la charge effective sur les jambes du train d'atterrissage à l'aide d'un dynamomètre ou d'un montage à jauges de contrainte, et de faire le rapport C/P ou F/P.

Pour obtenir g optimal, il est également possible d'effectuer une pondération sélective des échantillons de glissements obtenus par diversification des glissements pendant lesdites phases de mesures. Par exemple, il est possible de ne pas tenir compte des glissements provoquant une diminution de l'adhérence, et de calculer un glissement intermédiaire entre les glissements ayant provoqué une augmentation de l'adhérence.

Par ailleurs, pour imposer une valeur de glissement de consigne à une roue freinée, on peut appliquer un couple de freinage, c'est-à-dire en fait une pression hydraulique dans les freins associés aux roues, et faire décroître légèrement cette pression dès que le glissement mesuré atteint ou dépasse légèrement la valeur de consigne désirée.

Dans une forme avantageuse du procédé selon l'invention, les différentes valeurs de glissement de consigne appliquées aux différentes roues freinées pendant la première phase de chaque période de freinage sont déduites de la valeur optimale de glissement de la période précédente, l'une pouvant être égale à cette valeur optimale alors que les autres diffèrent de quelques centièmes en plus ou en moins.

La période initiale de freinage peut être telle que l'on impose aux différentes roues freinées un glissement constant et identique pour l'ensemble de celles-ci, la valeur commune de ce glissement initial étant prédéterminée, par exemple par voie expérimentale, en fonction des caractéristiques de l'aéronef.

Le début et la fin de chaque période de freinage peuvent être déterminés à partir de différents paramètres, tels que distance de roulage freiné parcourue ou à parcourir, ou temps écoulé depuis l'atterrissage. Cependant, il est avantageux que le début et la fin d'une période de freinage soient déterminés par la vitesse de roulage de l'aéronef. Par exemple, la phase initiale de freinage avec une valeur commune de glissement pour toutes les roues peut commencer dès l'impact du train avant au sol (suivant l'impact du train principal), la seconde phase étant enclenchée pour une vitesse de roulage de 50 m/s, la troisième pour une vitesse de roulage de 35 m/s et une quatrième pour une vitesse de roulage de 20 m/s.

Les figures du dessin annexé feront bien comprendre comment l'invention peut être réalisée.

La figure 1 illustre, en fonction du glissement g d'une roue par rapport au sol, la variation du coefficient d'adhérence μ de cette roue.

La figure 2 montre, en coupe verticale selon la ligne II-II de la figure 3, un boggie de train d'atterrissage d'aéronef, équipé pour la mise en œuvre du procédé selon l'invention.

La figure 3 montre, en vue de dessus, le boggie de la figure 2.

La figure 4 donne le schéma d'un dispositif de freinage pour la mise en œuvre du procédé selon l'invention.

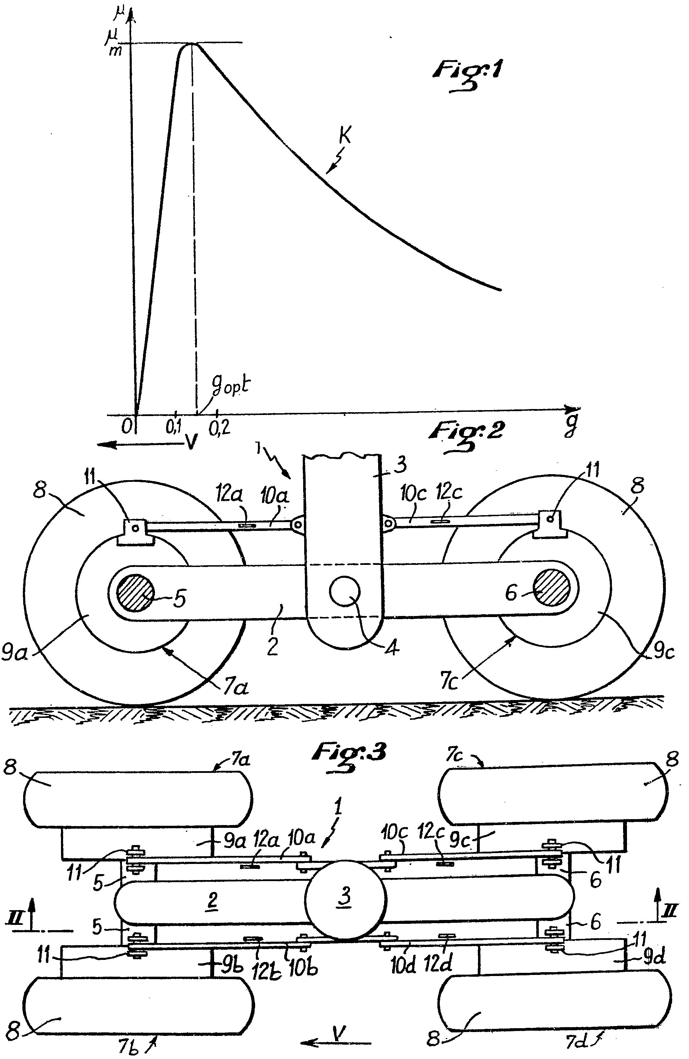

Sur la figure 1, on a représenté l'allure générale de la courbe K, représentative de la fonction μ = f(g), donnant l'adhérence au sol μ d'une roue freinée en fonction du glissement g de cette roue freinée par rapport au sol. L'allure générale de cette courbe comporte une portion rapidement croissante pour des valeurs de g comprises entre 0 et 0,10 et une portion décroissante au-delà de g = 0,20, l'adhérence μ passant par une valeur maximale $\mu_m$ pour une valeur optimale $g_{opt}$ de g, voisine de 0,15. Bien entendu, la courbe K varie en fonction de différents paramètres tels que état du pneumatique équipant la roue, état de la piste, etc... ; cependant, cette courbe K présente toujours l'allure générale de la figure 1. On voit donc qu'il est intéressant de réguler le freinage d'un aéronef en fonction du glissement des roues freinées, de sorte à imposer auxdites roues le glissement optimal $g_{opt}$ afin que l'adhérence μ présente sa valeur maximale $\mu_m$.

Le procédé selon l'invention sera expliqué ci-après dans son application aux roues du boggie 1 des figures 2 et 3.

Le boggie 1 d'un train d'atterrissage d'avion gros porteur, montré par ces figures, comporte un longeron 2 articulé en son milieu à la partie inférieure d'un fût 3, par l'intermédiaire d'un axe horizontal 4. A sa partie supérieure, le fût 3 est solidaire du fuselage (non représenté) de l'avion.

A ses deux extrémités, le longeron 3 est pourvu d'arbres transversaux 5 ou 6, sur chacun desquels sont montées rotatives deux roues jumelées 7a, 7b ou 7c, 7d, identiques et pourvues de pneumatiques 8. A chaque roue 7a à 7d est associé un frein à disques 9a à 9d, dont la plaque de couple est empêchée de tourner par une barre de frein 10a à 10d. A cet effet, chaque barre de frein 10a à 10d est articulée à l'une de ses extrémités au fût 3 et, à son autre extrémité, à une chape 11, solidaire de ladite plaque de couple correspondante.

On remarquera, en supposant que le boggie 1 se déplace dans le sens de la flèche V (figures 2 et 3), qu'une action de freinage des freins 9a à 9d, se traduit par une compression des barres de frein 10c et 10d disposées entre le fût 3 et les roues arrière 7c et 7d et par une traction des barres de frein 10a et 10b disposées entre le fût 3 et les roues avant 7a et 7b. On peut donc placer sur ces barres de frein 10a à 10d des jauges de contrainte 12a à 12d pour mesurer le couple de freinage exercé par les freins 9a à 9d sur les roues 7a à 7d.

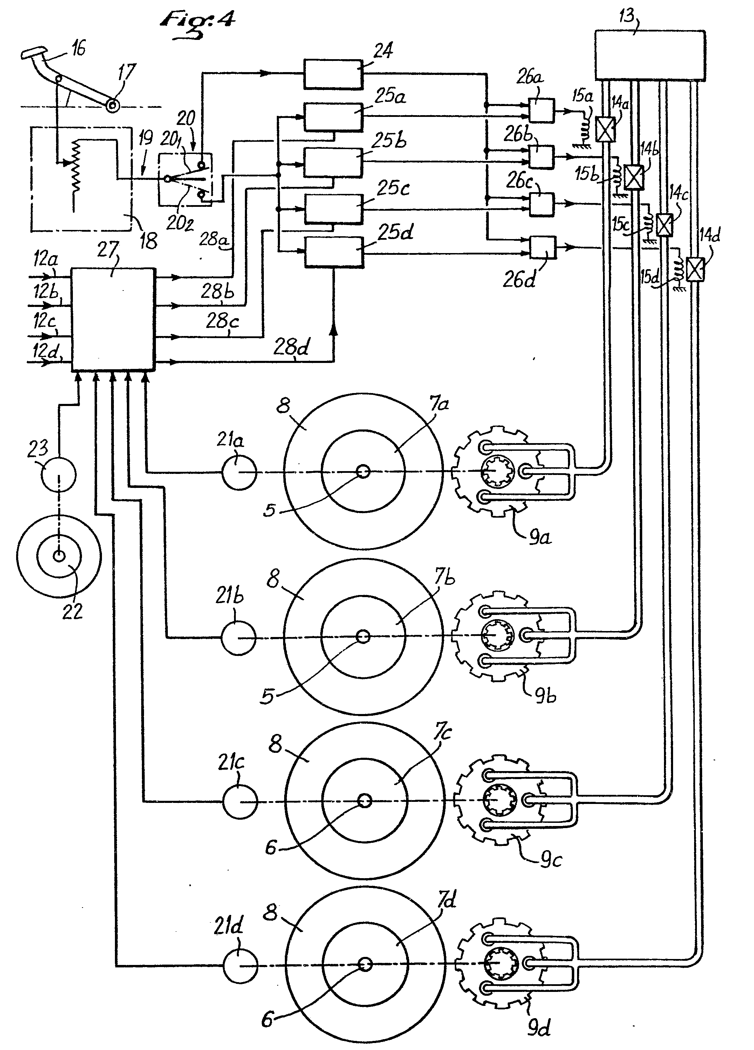

Comme le montre la figure 4, qui représente schématiquement un dispositif de freinage pour la mise en œuvre du procédé conforme à l'invention, les freins 9a à 9d sont alimentés à partir d'une source de fluide hydraulique 13 par l'intermédiaire de servovannes respectives 14a à 14d.

Ces servovannes 14a à 14d sont normalement maintenues fermées par le courant traversant leur enroulement de commande respectif 15a à 15d qui reçoit la synthèse des différents signaux électriques du montage.

Une pédale de frein 16, pivotant autour de l'axe 17, commande un transmetteur de pédale 18, essentiellement constitué par un potentiomètre alimenté par une tension de bord.

La sortie 19 du transmetteur 18 est reliée à un commutateur 10 à deux positions, commandé par le pilote de l'aéronef : si le commutateur se trouve dans la position $20_1$, le freinage de l'avion est « manuel », c'est-à-dire dû à l'action du pilote sur la pédale 16, tandis que si le commutateur se trouve dans la position $20_2$, le freinage de l'avion est « automatique », c'est-à-dire asservi en glissement.

Sur chacune des roues freinées 7a à 7d, est respectivement montée une génératrice tachymétrique 21a à 21d. De même, sur au moins une roue non freinée 22 de l'aéronef (roue du train avant) est montée une génératrice tachymétrique 23.

En aval du commutateur 20, le dispositif de freinage comporte deux branches en parallèle reliées chacune à la position $20_1$ ou $20_2$, l'une comportant un dispositif d'actionnement direct 24, l'autre comportant quatre dispositifs d'asservissement en glissement 25a à 25d eux-mêmes en parallèle les uns sur les autres. Ces branches aboutissent à des circuits d'adaptation 26a à 26d, chacun associé à un enroulement de commande respectif 15a à 15d et servant de générateur de courant pour celui-ci. Chacun des circuits d'adaptation 26a à 26d comporte deux entrées, dont l'une est reliée à la sortie du dispositif d'actionnement direct 24 et l'autre à la sortie du dispositif d'asservissement 25a à 25d associé.

Par ailleurs, le dispositif de freinage comporte une calculatrice 27, recevant les signaux des quatre jauges de contrainte 12a à 12d et celui des génératrices tachymétriques 21a, 21b, 21c, 21d et 23. Cette calculatrice 27 commande les quatre dispositifs d'asservissement 25a à 25d par les lignes 28a à 28d correspondantes.

Lorsqu'un avion prend contact avec le sol, le pilote a le choix du mode de freinage jusqu'à l'arrêt : s'il place le commutateur 20 dans la position $20_1$, il commandera le freinage de façon usuelle par commande de la pédale 16, par l'intermédiaire des dispositifs 18, 24, 26a à 26d, 15a à 15d, 14a à 14d et 7a à 7d. En revanche, s'il place le commutateur 20 dans la position $20_2$, le freinage sera automatique et commandé par la calculatrice 27 et les dispositifs d'asservissement 25a à 25d, indépendamment de l'enfoncement de la pédale 16 qu'il effectue.

En cas de choix de freinage automatique selon l'invention (le commutateur 20 est donc en position $20_2$) dès que le train de nez de l'avion a pris contact avec le sol (ce qui intervient après la prise de contact du train principal), la calculatrice 27 commande les dispositifs d'asservissement 25a à 25d, pour que ceux-ci imposent aux roues 7a à 7d correspondantes une même valeur de glissement de consigne, prédéterminée expérimentalement pour l'aéronef considéré. Cette valeur de glissement de consigne initiale, commune aux quatre roues 7a à 7d est par exemple égale à 0,15. Pour cela, les dispositifs d'asservissements 25a à 25d commandent les circuits d'adaptation 26a à 26d pour que la pression du fluide de freinage dans les freins 9a et 9d, commandée par les servovannes 14a, 15a-14b, 15b-14c, 15c et 14d, 15d corresponde à la valeur de glissement considérée, soit dans l'exemple 0,15. La calculatrice 27 calcule, à partir des indications des génératrices tachymétriques 21a, 21b, 21c, 21d et 23, les valeurs de glissement réellement prises par chacune des roues 7a à 7b et, par l'intermédiaire des chaînes 25a, 26a, 15a-25b, 26b, 15b-25c, 26c, 15c, et 25d, 26d, 15d, agit sur les servovannes 14a à 14d pour maintenir le glissement des quatres roues 7a à 7d à la valeur commune choisie.

Grâce à cette première période de freinage des roues 7a à 7d asservies à un glissement commun, la vitesse de l'aéronef décroît. Lorsque cette vitesse atteint, en décroissant, une première valeur déterminée, par exemple 50 m/s, la génératrice tachymétrique 23 envoie un ordre à la calculatrice 27, qui va alors commander une seconde période de freinage en asservissement de glissement, différente de la première.

Dans une seconde période d'asservissement, la calculatrice 27 demande tout d'abord, dans une première phase, aux dispositifs d'asservissement 25a à 25d, par l'intermédiaire des liaisons 26a, 15a, 14a-26b, 15b, 14b-26c, 15c, 14c et 26d, 15d, 14d respectives, d'imposer aux quatre roues 7a à 7d quatre valeurs de glissement de consigne différentes et prédéterminées ; par exemple, on impose à la roue freinée 7a un glissement égal à 0,09 et à la roue freinée 7b un glissement égal à 0,11, alors que les glissements imposés aux roues freinées 7c et 7d ont respectivement pour valeurs 0,13 et 0,15, ces valeurs de consigne étant maintenues constantes comme précédemment, grâce au calcul direct des glissements réels à partir des indications des génératrices tachymétriques 21a à 21d et 23.

Pendant cette première phase de la seconde période de freinage automatique, la calculatrice 27, qui reçoit les signaux des jauges de contrainte 12a à 12c, calcule le couple de freinage sur chacune desdites roues. A partir de ce couple de freinage, du moment d'inertie des roues (emmagasiné en mémoire) et de la décélération angulaire de celles-ci (calculé à partir du signal des génératrices tachymétriques 21a à 21d), la calculatrice 27 calcule, de la façon indiquée ci-dessus, le couple de traînée de chaque roue 7a à 7d, qui, comme on l'a vu, est une fonction significative du coefficient d'adhérence.

On obtient donc quatre valeurs de coefficient d'adhérence, chacun associé à une valeur de glissement. De ces quatre couples de valeurs $\mu$, g, la calculatrice 27 peut, à partir d'une loi prédéterminée, emmagasinée en mémoire et représentant l'allure générale de la courbe K, déterminer une première valeur optimale $g_{opt\ 1}$ pour le glissement g, pendant la seconde période de freinage asservie.

La première phase de la seconde période de freinage est donc également une phase de mesure.

A la suite de cette phase de mesure, on effectue la seconde phase de la seconde période de freinage pendant laquelle la calculatrice 27 commande aux dispositifs d'asservissement 25a à 25d d'appliquer aux quatre roues 7a à 7d un même glissement constant ayant $g_{opt\ 1}$ pour valeur.

Cette seconde phase de la seconde période de freinage prend fin lorsque la vitesse de l'aéronef atteint une seconde valeur déterminée, par exemple égale à 35 m/s.

Alors la génératrice tachymétrique 23 commande la calculatrice 27, qui elle-même va piloter une troisième période de freinage.

Pendant une première phase de cette troisième période, la calculatrice 27 demande aux dispositifs d'asservissement 25a à 25d, de façon semblable à ce qui a été décrit ci-dessus, d'imposer aux quatre roues 7a à 7d quatre valeurs de glissement de consigne différentes et prédéterminées, ces quatre valeurs étant choisies égales à $g_{opt\ 1} \pm \varepsilon$. Par exemple, on impose à la roue 7a un glissement égal à $g_{opt\ 1}$ et à la roue 7b un glissement égal à $g_{opt\ 1} - 0,01$, alors que les glissements imposés aux roues 7c et 7d ont respectivement pour valeur $g_{opt\ 1} - 0,02$ et $g_{opt\ 1} + 0,02$.

De façon identique à ce qui a été décrit ci-dessus, la calculatrice 27 en déduit une seconde valeur optimale $g_{opt\ 2}$, qu'elle impose aux quatre roues 7a à 7d pendant la seconde phase de la troisième période de freinage.

Lorsque la vitesse de l'aéronef atteint une troisième valeur déterminée, par exemple égale à 20 m/s, la génératrice 23 prévient la calculatrice 27, qui va commander une quatrième période de freinage.

Pendant une première phase de cette quatrième période, la calculatrice 27 impose aux quatre roues 7a à 7d quatre valeurs de glissement de consigne choisies égales à $g_{opt\ 2} \pm \varepsilon$. Par exemple, elle impose à la roue 7a un glissement égal à $g_{opt\ 2}$ et à la roue 7b un glissement égal à $g_{opt\ 2} - 0,01$, alors que les glissements imposés aux roues 7c et 7d ont respectivement pour valeurs $g_{opt\ 2} - 0,02$ et $g_{opt\ 2} + 0,02$.

La calculatrice 27 en déduit alors une troisième valeur optimale $g_{opt\ 3}$, qu'elle impose aux quatre roues 7a à 7d pendant la seconde phase de la quatrième période de freinage. Cette quatrième période de freinage peut se poursuivre jusqu'à l'arrêt complet de l'avion. Elle peut également être arrêtée lorsque la génératrice 23 indique une quatrième valeur prédéterminée de vitesse, par exemple 10 m/s. Dans ce cas, le pilote reprend la commande du freinage jusqu'à l'arrêt, après basculement du commutateur 20 de sa position $20_2$ à sa position $20_1$.

Ainsi, selon l'invention, les calculs et les mesures effectués pour plusieurs valeurs de glissement permettent de calculer un glissement optimal valable pour chaque période de roulage, c'est-à-dire pour une plage de vitesses réduite.

Ce procédé de mesure et de régulation présente un avantage important par rapport aux procédés de mesure et de régulation continues : il permet d'effectuer des mesures pour des valeurs de glissement dépassant la valeur optimale sans provoquer de départs en blocage des roues freinées, du fait de la faible durée des mesures.

Il permet de ce fait de calculer une valeur réellement optimale du glissement. Pour chaque période de freinage, il fait intervenir indirectement la charge de chaque roue.

Dans les systèmes connus, soit le glissement optimal n'est pas atteint, soit celui-ci est atteint par période mais dépassé à d'autres, ce qui provoque des blocages des roues.

## Revendications

1. Procédé de freinage d'un aéronef roulant sur le sol après un atterrissage et comportant une pluralité de roues freinées (7a, 7b, 7c et 7d), par recherche d'un coefficient d'adhérence maximal entre lesdites roues freinées et le sol sur lequel elles roulent, caractérisé en ce que l'on subdivise ledit freinage en une pluralité de périodes de freinage successives et en ce que chacune desdites périodes de freinage est elle-même partagée en une première phase pendant laquelle, d'une part, on impose à chaque roue freinée (7a à 7d) une valeur de glissement de consigne qui lui est propre et qui est différente des valeurs de glissement de consigne imposées aux autres roues freinées et, d'autre part, on détermine la valeur optimale de glissement $g_{opt}$ de la période à partir du calcul de grandeurs représentatives des coefficients d'adhérence $\mu$ correspondant auxdites différentes valeurs de glissement de consigne, et en une seconde phase pendant laquelle on impose ladite valeur optimale de glissement à l'ensemble desdites roues freinées.

2. Procédé de freinage selon la revendication 1, caractérisé en ce que, dans une période de freinage, la première phase dure quelques dixièmes de seconde, alors que la seconde phase dure quelques dizaines de secondes.

3. Procédé de freinage selon l'une des revendications 1 ou 2, caractérisé en ce que les coefficients d'adhérence des roues freinées sont représentés par la force de traînée ou le couple de traînée de celles-ci.

4. Procédé de freinage selon l'une quelconque des revendications 1 à 3, appliqué à des roues (7a à 7d), pourvues de freins hydrauliques (9a à 9d), caractérisé en ce qu'on commande le glissement des roues freinées par commande de la pression du fluide dans les freins associés.

5. Procédé de freinage selon l'une quelconque des revendications 1 à 4, caractérisé en ce que les différentes valeurs de glissement de consigne appliquées aux différentes roues freinées (7a à 7d) pendant la première phase de chaque période de freinage sont déduites de la valeur optimale de glissement $g_{opt}$ de la période précédente, l'une pouvant être égale à cette valeur optimale alors que les autres diffèrent de quelques centièmes en plus ou en moins.

6. Procédé selon l'une quelconque des revendications 1 à 5, caractérisé en ce qu'il comporte une phase initiale, dans laquelle on impose aux différentes roues freinées (7a à 7d) un glissement constant et identique pour l'ensemble de celles-ci, la valeur commune de ce glissement initial étant prédéterminée en fonction des caractéristiques de l'aéronef.

7. Procédé selon l'une quelconque des revendications 1 à 6, caractérisé en ce que le début et la fin d'une période de freinage sont déterminés par des valeurs prédéterminées de la vitesse de roulage de l'aéronef.

8. Procédé selon la revendication 3, caractérisé en ce que la force de traînée ou le couple de traînée sont appréhendés au moyen des jauges de contrainte.

9. Procédé selon l'une quelconque des revendications 1 à 8, caractérisé en ce qu'il est appliqué à la totalité des roues freinées (7a à 7d) de tous les boggies (1) d'un train d'atterrissage.

10. Dispositif pour la mise en œuvre du procédé spécifié sous la revendication 1, pour le freinage d'un aéronef roulant sur le sol après un atterrissage et comportant une pluralité de roues freinées (7a à 7d) équipées de freins hydrauliques (9a à 9d) et au moins une roue non freinée (22), ce dispositif mettant en œuvre un processus de mesure et d'optimisation séquentiel du coefficient d'adhérence roues-sol, caractérisé en ce qu'il comporte des moyens (12a à 12b) de détection de grandeurs représentatives des coefficients d'adhérence de chaque roue, en ce que le frein (9a à 9d) de chaque roue freinée (7a à 7d) est commandé par sa propre servovanne (14a-15a, 14b-15b, 14c-15c et 14d-15d), en ce que chaque roue freinée (7a à 7d) et la roue non freinée (22) sont pourvues d'une génératrice tachymétrique (21a, 21b, 21c, 21d et 23) et en ce qu'une calculatrice électronique (27) reçoit les signaux desdites génératrices tachymétriques, ainsi que des informations provenant desdits moyens de détection (12a à 12b) des grandeurs représentatives des coefficients d'adhérence et commande le glissement desdites roues par l'intermédiaire desdites servovannes.

**Claims**

1. Process for braking an aircraft taxiing on the ground after landing and comprising a plurality of braked wheels (7a, 7b, 7c and 7d), by seeking a maximum coefficient of adherence between said braked wheels and the ground on which they roll, characterized by the steps of subdividing said braking into a plurality of successive braking periods, and dividing each of said braking periods into a first phase during which, on the one hand, a reference sliding value is imposed on each braked wheel (7a to 7d), which is particular thereto and which is different from the reference slip values imposed on the other braked wheels and, on the other hand, the optimal sliding value $g_{opt}$ of the period is determined from calculation of quantities representative of the coefficients of adherence $\mu$ corresponding to said different reference sliding values, and into a second phase during which the optimal sliding value is imposed on all the braked wheels.

2. The braking process of Claim 1, characterized in that, in a braking period, the first phase lasts a few tenths of second, whilst the second phase lasts a few tens of seconds.

3. The braking process of one of Claims 1 or 2, characterized in that the coefficients of adherence of the braked wheels are represented by the drag force of the drag torque thereof.

4. The braking process of one of Claims 1 to 3 applied to wheels (7a to 7d) provided with hydraulic brakes (9a to 9d), characterized in that the sliding of the braked wheels is controlled by controlling the pressure of the fluid in the associated brakes.

5. The braking process of one of Claims 1 to 4, characterized in that the different reference sliding values applied to the different braked wheels (7a to 7d) during the first phase of each braking period are deduced from the optimal sliding value $g_{opt}$ of the preceding period, one being equal to this optimal value whilst the others differ more or less by a few tenths.

6. The process of one of Claims 1 to 5, characterized in that an initial phase in which a constant sliding is imposed on the different braked wheels, which is identical for all the wheels (7a to 7d), the common value of this initial sliding being predetermined as a function of the characteristics of the aircraft.

7. The process of one of Claims 1 to 6, characterized in that the beginning and the end of a braking period are determined by predetermined values of the taxiing speed of the aircraft.

8. The process of Claim 3, characterized in that the drag force or the drag torque are known by means of strain gauges.

9. The process of one of Claims 1 to 8, characterized in that it is applied to all the braked wheels (7a to 7d) of all bogies (1) of a landing gear.

10. Device for carrying out the process of Claim 1, for braking an aircraft comprising a plurality of braked wheels (7a to 7d) equipped with hydraulic brakes (9a to 9d) and at least one non-braked wheel (22), this device carrying out a sequential process of measure and optimization of the adherence coefficient wheels-ground, characterized in that it comprises means (12a to 12d) for detecting quantities representative of the coefficients of adherence corresponding to each wheel, in that the brake (9a to 9d) of each braked wheel (7a to 7d) is controlled by its own servovalve (14a-15a, 14b-15b, 14c-15c and 14d-15d), in that each braked wheel (7a to 7d) and the non-braked wheel (22) are provided with a tachometer generator (21a, 21b, 21c, 21d and 23) and in that an electronic calculator (27) receives the signals from said tachometer generators, as well as information from said means (12a to 12d) for detecting the quantities representative of the coefficients of adherence and controls the sliding of said wheels via said servo-valves.

**Ansprüche**

1. Verfahren zum Bremsen eines auf dem Boden rollenden Flugzeuges nach dessen Landung, wobei mehrere bremsbare Räder (7a, 7b, 7c und 7d) mit Ermittlung des maximalen Haftungskoeffizienten zwischen den gebremsten Rädern und dem Boden, auf dem sie rollen, dadurch gekennzeichnet, daß die Bremsung in mehrere aufeinanderfolgende Bremsperioden unterteilt wird und daß jede dieser Bremsperioden in eine erste Phase geteilt wird, während der einerseits jedem gebremsten Rad (7a bis 7d) ein ihm eigener Sollgleitwert erteilt wird, der sich von dem der anderen gebremsten Rädern erteilt wird unterscheidet, und andererseits der optimale Gleitwert $g_{opt}$ der Periode, ausgehend von der Berechnung der die den verschiedenen Sollgleitwerten entsprechenden Haftungskoeffizienten $\mu$ darstellenden Größen ermittelt wird, und in eine zweite Phase, während der dem gesamten Satz der gebremsten Räder der optimale Gleitwert erteilt wird.

2. Bremsverfahren nach Anspruch 1, dadurch gekennzeichnet, daß in der Bremsperiode die erste Phase einige Zentel Sekunden dauert, während die zweite Phase einige Zehner-Sekunden lang dauert.

3. Bremsverfahren nach einem der Ansprüche 1 oder 2, dadurch gekennzeichnet, daß die Haftungskoeffizienten der gebremsten Räder durch die Widerstandskraft oder deren Widerstandsmoment dargestellt werden.

4. Bremsverfahren nach einem der Ansprüche 1 bis 3 in Anwendung auf mit Hydraulikbremsen (9a bis 9d) versehenen Rädern (7a bis 7d), dadurch gekennzeichnet, daß das Gleiten der gebremsten Räder durch Druckregelung des in den zugeordneten Bremsen befindlichen Strömungsmittels gesteuert wird.

5. Bremsverfahren nach einem der Ansprüche 1 bis 4, dadurch gekennzeichnet, daß die verschiedenen Sollgleitwerte, die an die verschiedenen gebremsten Räder (7a bis 7d) während der ersten Phase jeder Bremsperiode gegeben werden, vom optimalen Gleitwert $g_{opt}$ der vorhergehenden Periode abgezogen werden, wobei einer dem optimalen Wert entsprechen kann und die anderen sich um einige Zentimeter mehr oder weniger davon unterscheiden.

6. Bremsverfahren nach einem der Ansprüche 1 bis 5, dadurch gekennzeichnet, daß eine Initialphase besteht, in der den verschiedenen gebremsten Rädern (7a bis 7d) ein für deren Satz konstantes und identisches Gleiten erteilt wird, wobei der gemeinsame Wert dieses Initialgleitens in Abhängigkeit von den Flugzeugcharakteristiken festgelegt ist.

7. Bremsverfahren nach einem der Ansprüche 1 bis 6, dadurch gekennzeichnet, daß der Anfang und das Ende einer Bremsperiode bestimmt wird durch die festgelegten Werte der Rollgeschwindigkeit des Flugzeuges.

8. Verfahren nach Anspruch 3, dadurch gekennzeichnet, daß die Widerstandskraft oder das Widerstandsmoment mittels Dehnungsstreifen erfasst wird.

9. Verfahren nach einem der Ansprüche 1 bis 8, dadurch gekennzeichnet, daß es angewandt wird auf die Gesamtheit der gebremsten Räder (7a bis 7d) aller Fahrwerke (1) eines Landegestells.

10. Vorrichtung zum Durchführen des unter Anspruch 1 dargestellten Verfahrens zum Bremsen eines auf dem Boden rollenden Flugzeuges nach dessen Landung und mit mehreren gebremsten Rädern, die Hydraulikbremsen (9a bis 9d) aufweisen, sowie zumindest einem nicht gebremsten Rad (22), wobei die Vorrichtung sich eines sequentiellen Meß- und Optimierungsverfahrens des Haftungskoeffizienten Rad/Boden bedient, gekennzeichnet durch eine Einrichtung (12a bis 12d) zum Erfassen der die Haftungskoeffizienten jedes Rades darstellenden Größen, und dadurch, daß die Bremse (9a bis 9d) jedes gebremsten Rades (7a bis 7d) von seinem eigenen Servoventil (14a-15a, 14b-15b, 14c-15c und 14d-15d) gesteuert wird, daß jedes gebremste Rad (7a bis 7d) und das nichtgebremste Rad (22) einen Drehzahlgeber (21a, 21b, 21c, 21d und 23) besitzen und daß ein elektronischer Rechner (27) die Signale des Drehzahlgebers sowie die Informationen aus der Einrichtung (12a bis 12d) zum Erfassen der die Haftkoeffizienten darstellenden Größen empfängt und das Gleiten der Räder über die Servoventile steuert.

Fig.1

Fig.2

Fig.3

0 032 853

Fig. 4